(19) Europäisches Patentamt
European Patent Office
Office européen des brevets

(11) Publication number : **0 611 095 A1**

(12) **EUROPEAN PATENT APPLICATION**

(21) Application number : **94300784.9**

(22) Date of filing : **02.02.94**

(51) Int. Cl.$^5$ : **C08G 18/08,** C08G 18/44, C09D 175/06

(30) Priority : **08.02.93 JP 20312/93**

(43) Date of publication of application : **17.08.94 Bulletin 94/33**

(84) Designated Contracting States : **DE FR GB**

(71) Applicant : **NIPPON PAINT CO., LTD.**
**1-2, Oyodokita 2-chome**
**Kita-ku**
**Osaka-shi Osaka 572 (JP)**

(72) Inventor : **Takimoto, Masaaki**
**842-66, Oaza Kishiwada**
**Kadoma-shi, Osaka (JP)**
Inventor : **Izumi, Minao**
**3-17-12, Kamokogahara,**
**Higashi Nada-ku**
**Kobe-shi, Hyogo (JP)**

(74) Representative : **Pearce, Anthony Richmond**
**MARKS & CLERK,**
**Alpha Tower,**
**Suffolk Street Queensway**
**Birmingham B1 1TT (GB)**

(54) **Water-based coating composition.**

(57) A water-based coating composition is disclosed, comprising
(1) a self-emulsified polyurethane resin emulsion,
(2) a resin which is either (i) a polymer of an oxazoline represented by formula (I) :

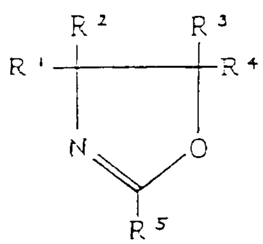

(I)

wherein $R^1$, $R^2$, $R^3$, and $R^4$ each represents a hydrogen atom, a halogen atom, an alkyl group, a phenyl group, or a substituted phenyl group ; and $R^5$ represents a non-cyclic organic group having an addition-polymerizable unsaturated bond or (ii) a copolymer of the oxazoline and a monomer which is not reactive to an oxazoline group, and
(3) a self-emulsifiable epoxy resin.

EP 0 611 095 A1

## FIELD OF THE INVENTION

The present invention relates to a novel water-based coating composition utilizable in the whole field of precoated metals and in the post-coating field. More particularly, this invention relates to a water-based coating composition which forms a coated film having a high degree of processability, anticorrosive properties, and suitability for re-coating in the field of water-based coatings (primers) for use in producing rust-proof automotive steel sheets or primed steel sheets for electrical appliances, building materials, etc.

## BACKGROUND OF THE INVENTION

Electrogalvanized steel sheet, welding-plated steel sheet, and steel sheets plated with various alloys are produced and extensively used in applications such as electrical appliances, automobiles, and building materials. Under these circumstances, there is a growing desire in recent years especially for surface-treated steel sheets having excellent corrosion resistance, and the demand for such steel sheets tends to increase.

In the automobile industry, the demand for surface-treated steel sheets with excellent corrosion resistance is strong from the standpoints of safety and economy because automotive bodies are exposed to severe corrosive environments, as seen in the corrosion caused by rock salt scattered on roads for the purpose of antifreezing in the North America and other regions and the corrosion caused by acid rain attributable to smokes emitted from industrial areas.

Well known as a surface-treated steel sheet having the desired corrosion resistance is a steel sheet covered with an organic film (precoated steel sheet). For forming organic coated films in the production of such coated steel sheets, use is made of water-based coating compositions containing polyester, polyurethane, or polyolefin resins or the like which are water-soluble, water-dilutable, or water-dispersible. Because these coating compositions are water-based, they have advantages that there is no danger of causing a fire or polluting the working atmosphere and that the coated films formed therefrom are excellent in mechanical strength, flexibility, and solvent resistance. However, there has been a problem that since a hydrophilic group should be incorporated in a large amount in order to make the resins water-soluble, water-dilutable, or water-dispersible, the coated films are insufficient especially in water resistance, durability, and the like.

As an expedient for overcoming the above problem, a technique has recently been disclosed which comprises incorporating an aminoplast resin (e.g., a water-soluble melamine resin), an epoxy resin, an aziridine-type compound, or the like as a hardener to improve the film performances mentioned above. However, coated films obtained with these hardeners are not always sufficient in anticorrosive property in a severe corrosive environment. If the coated film thickness is increased in order to ensure anticorrosive properties, the coated film comes to have poor suitability for welding and is virtually unusable for automotive steel sheets and the like.

As another expedient for overcoming the above-described problem, a water-based resin composition is described in JP-A-2-99537 and JP-A-5-295275 in which the composition contains a polymer A comprising a water-dispersible polyurethane resin and a polymer B obtained by the polymerization of an addition-polymerizable oxazoline and, if desired, one or more other monomers. (The term "JP-A" as used herein means an "unexamined published Japanese patent application".) There is a description in the references to the effect that the water-based resin composition cures in a short time at room temperature to attain improvements in mechanical strength, water resistance, solvent resistance, heat resistance, durability, and adhesiveness to substrates.

However, the water-based resin composition described above has had problems that when the emulsified particles have particle diameters of 1,000 nm or larger, durability is still insufficient, and that the coated film formed has poor re-coating suitability.

Also known is a technique of applying a water-based composition consisting mainly of a dispersion of a copolymer of an $\alpha$-olefin-$\alpha$,$\beta$-unsaturated ethylenically carboxylic acid.

The above-described water-based composition has been defective in that since the composition is produced through emulsion polymerization and hence contains an emulsifying agent, anticorrosive properties are impaired. It further has had other problem, for example, that because the resin is acrylic, the coated film formed from the composition has a low internal cohesive force and is insufficient in anticorrosive property in both flat and processed parts of the substrates.

In U.S. Patent 4,801,644 (corresponding to JP-A-62-109813) is described an aqueous dispersion of a polyurethane formed from a product of the reaction of a polyurethane prepolymer terminated by an isocyanate group and having a carboxylic acid salt with a chain extender containing active hydrogen. According to that reference, this aqueous dispersion gives a film which is superior in solvent resistance and water resistance to the film formed from any aqueous polyurethane dispersion on the market and which has excellent physical

properties.

However, the aqueous polyurethane dispersion is insufficient in anticorrosive property when the polyol used has poor hydrolytic resistance. In addition, the dispersion has had another problem that when the emulsified-particle diameters thereof are 1,000 nm or larger, the coated film formed therefrom has poor anticorrosive properties and the dispersion stability is also insufficient.

Consequently, a water-based coating composition which forms a coated film having excellent anticorrosive properties even in a severe corrosive environment and virtually usable in automotive steel sheets or the like has not been obtained so far.

In addition to the high rust resistance described above, a precoated steel sheet of the kind described hereinabove is required to further have suitability for electrodeposition and press processing, spot weldability, corrosion resistance after electrodeposition, and secondary adhesion.

In order to meet these requirements, improvements have conventionally been made on coating compositions for forming the coated films of precoated steel sheets. Generally, a technique for imparting electrodeposition suitability by incorporating the above-mentioned fumed silica is well-known. However, a silica content of 27.5% or higher is necessary for obtaining electrodeposition suitability on a virtually required level and such a high silica content not only results in impaired suitability for press processing and spot welding, but causes unevenness of treatment in a degreasing step due to the dissolution or falling of silica particles during the step. Further, a technique for imparting electrodeposition suitability by incorporating a hydrophilic resin (e.g., a polyamide resin) is well-known. However, this technique is defective in that the content of the hydrophilic resin should be from 5 to 40% in order to obtain the required electrodeposition suitability, resulting in impaired anticorrosive properties, and that the solvent to be used is limited (to dibenzyl alcohol), which is disadvantageous from economical and other standpoints.

As described above, the conventional techniques are still far from attaining well balanced coated film performances. If the incorporation of such a silica, hydrophilic resin, electrically conductive pigment, etc., even in relatively small amounts is effective in obtaining electrodeposition suitability, this method is more practical because various techniques can be employed more easily, such as alteration of base resins, incorporation of hardeners and rust preventives, and selection of such additives from wider ranges.

## SUMMARY OF THE INVENTION

Accordingly, an object of the present invention is to provide a water-based coating composition excellent in anticorrosive property, processability, and re-coating suitability.

Another object of the present invention is to provide a water-based coating composition which can impart electrodeposition suitability required for electrodeposition and is excellent in film performances such as press processing suitability, spot weldability, rust-preventive property, anticorrosive property after electrodeposition, and secondary adhesion.

As a result of intensive studies made by the present inventors on a novel water-based coating composition in order to attain the above-described objects, it has been found that the subjects described below should be attained in order to improve the anticorrosive properties and processability of the organic coated films formed from the conventional coating compositions.

That is, since the factors which govern the improvements of anticorrosive properties and adhesion are ion permeability and adhesion to substrates, urethane resin films having a high internal cohesive force due to the urethane bond, which has the two factors, are superior to acrylic resins in anticorrosive property in both flat and processed parts of the substrates because the former resin films have lower water permeability and higher elongation at break. The urethane bond also contributes to an improvement in adhesion because it forms a hydrogen bond or other linkage with substrates. Therefore the subjects for using such a urethane resin to produce a water-based coating composition improved in anticorrosive property are (i) formation of an aqueous fine-particle emulsion (colloidal dispersion) which is emulsifier-free and has good dispersion stability; (ii) impartation of hydrolytic resistance; and (iii) selection of a hardener which reacts with a hydrophilic functional group after film formation. For attaining (i) the formation of an aqueous fine-particle emulsion which is emulsifier-free and has good dispersion stability, the ionomer method is used in which carboxyl groups, contributing to dispersion stability, are incorporated into a urethane backbone and the resulting urethane resin is hydrated and stabilized using an amine for neutralization, by which method the resin can be finely dispersed due to the ionicity to enable the emulsion to have improved film-forming properties and give a uniform and dense film free from coating defects. For attaining (ii) the impartation of hydrolytic resistance, a polycarbonate polyol is used, by which the resin can be made to have improved hydrolytic resistance and be less apt to be degraded and, hence, the deterioration of the barrier properties of an organic film can be diminished. Further, as a hardener for (iii) above which reacts with a hydrophilic functional group after film formation, an oxazoline-containing polymer resin is used which is a hardener that reacts with carboxyl groups at a low temperature in a short time period and does not impair coating adhesion; the incorporation of such a hardener is necessary because use of a self-emulsified polyurethane resin emulsion alone results in a coated film having impaired water resistance and poor anticorrosive properties due to the remaining carboxyl groups used as a hydrophilic group necessary for hydration. It has been found that anticorrosive properties and processability are improved by thus attaining (i) to (iii) described above.

It has further been found, for attaining the objects described hereinabove, that re-coating suitability can be improved without impairing the improved anticorrosive properties and processability, by using a self-emulsifiable epoxy resin along with the polyurethane resin to thereby incorporate secondary OH groups in the polyurethane resin in which the functional group has been consumed by the curing reaction. The present invention has been completed based on these findings.

The first object of the present invention can therefore be accomplished with a water-based coating composition comprising

(1) a self-emulsified polyurethane resin emulsion,

(2) a resin which is either (i) a polymer of an oxazoline represented by formula (I):

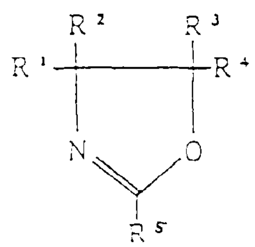

(I)

wherein $R^1$, $R^2$, $R^3$, and $R^4$ each represents a hydrogen atom, a halogen atom, an alkyl group, a phenyl group, or a substituted phenyl group; and $R^5$ represents a non-cyclic organic group having an addition-polymerizable unsaturated bond or (ii) a copolymer of the oxazoline and a monomer which is not reactive to an oxazoline group, and

(3) a self-emulsifiable epoxy resin.

The other object of the present invention can preferably be accomplished with a water-based coating composition comprising

(1) a self-emulsified polyurethane resin emulsion,

(2) a resin which is either (i) a polymer of an oxazoline represented by formula (I):

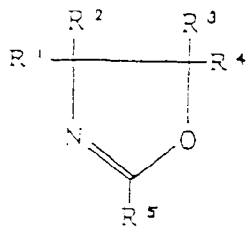

(I)

wherein $R^1$, $R^2$, $R^3$, and $R^4$ each represents a hydrogen atom, a halogen atom, an alkyl group, a phenyl group, or a substituted phenyl group and $R^5$ represents a non-cyclic organic group having an addition-polymerizable unsaturated bond or (ii) a copolymer of the oxazoline and a monomer which is not reactive to an oxazoline group,

(3) a self-emulsifiable epoxy resin, and

(4) a melamine cyanurate (a) and/or an ingredient (b) which is (b-1) a water-dispersible silica or water-dispersible aluminum silicate or (b-2) a colloidal particle dispersion (hereinafter called "colloidal particle dispersion") comprising mainly (i) a fumed silica or fumed aluminum silicate, (ii) a colloidizing agent (aid) which is at least one compound selected from the group consisting of a phosphoric acid compound, a molybdic acid compound, a boric acid compound, and a silicic acid compound, and (iii) water.

DETAILED DESCRIPTION OF THE INVENTION

The self-emulsified polyurethane resin emulsion (1) to be used in the present invention is one produced by dispersing or dissolving a polyurethane resin in water without using an emulsifying agent, which polyurethane resin has been obtained from (a) a polyol such as a diol, a polyester polyol, or a polyether polyol and (b) an aromatic, aliphatic, or alicyclic diisocyanate and, if desired, (c) a chain extender. For dispersing or dissolving the polyurethane resin in water without using an emulsifying agent, use can be made, for example, of (1) the method disclosed in JP-A-63-15816 and others in which method an ionic group such as sulfonyl or carboxyl is incorporated into the polyurethane polymer either in a side chain or at a terminal thereof to impart a hydrophilic property to thereby disperse or dissolve the resulting polyurethane in water by means of self-emulsification, or (2) a method in which a water-soluble polyol such as poly(ethylene glycol) is used as part of the polyol ingredient which is one of the major starting materials for polyurethane to thereby produce a hydrophilic polyurethane resin, which is then dispersed or dissolved in water. Since the self-emulsified polyurethane resin emulsion thus obtained contains no emulsifying agents, it has good dispersion stability and the resin has high internal cohesive force, so that a coated film free from coating defects and excellent in anticorrosive property can be formed therefrom.

The self-emulsified polyurethane resin emulsion to be used in the present invention, therefore, is not particularly limited as long as it satisfies the above-described requirement. For example, polyurethane resin emulsions produced by the method disclosed in JP-A-63-15816 and others can be used. However, the best suited is an anionic self-emulsified polyurethane resin emulsion obtained using a polycarbonate diol as a polyol component and preferably having a particle diameter of 1,000 nm or below. Specific examples thereof include NEOTAN UE1101 (self-emulsified polycarbonate-based polyurethane emulsion) manufactured by Toagosei Chemical Industry Co., Ltd., Japan; SUPER FLEX 100, SUPER FLEX 150 (both aqueous dispersion of a polyester-based urethane ionomer), and SUPER FLEX 460 (self-emulsified polycarbonate-based polyurethane emulsion) manufactured by Dai-ichi Kogyo Seiyaku Co., Ltd., Japan; and HYDRAN AP-10 (aqueous dispersion of a polyester-based urethane ionomer) manufactured by Dainippon Ink & Chemicals, Inc., Japan. The chemical properties (nonvolatile content, pH, whether the resin type is polycarbonate-based or not, whether the ionicity is anionic or not, and number-average molecular weight ($M_n$)) of those anionic self-emulsified polyurethane resin emulsions on the market are shown in Table 1 below.

Table 1

| Kinds of resin | Nonvolatile content (%) | pH | Resin type | Ionicity | Number-average molecular weight ($\times 10^4$) |
|---|---|---|---|---|---|
| NEOTAN UE1101 | 35 | 7-8.5 | polycarbonate-based | anionic | - |
| SUPER FLEX 100 | 30 | 8-10 | not polycarbonate-based | anionic | 10-30 |
| SUPER FLEX 150 | 30 | 8-10 | not polycarbonate-based | anionic | 10-30 |
| SUPER FLEX 460 | 30 | 7.5-9.5 | polycarbonate-based | anionic | - |
| HYDRAN AP-10 | 29-31 | 6-8 | not polycarbonate-based | anionic | 10-30 |

The resin (2) to be used in the present invention, which is either (i) a polymer of an oxazoline (a) represented by formula (I):

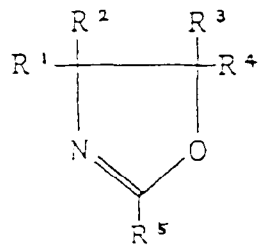

(I)

wherein $R^1$, $R^2$, $R^3$, and $R^4$ each represents a hydrogen atom, a halogen atom, an alkyl group, a phenyl group, or a substituted phenyl group and $R^5$ represents a non-cyclic organic group having an addition-polymerizable unsaturated bond or (ii) a copolymer of the oxazoline (a) and a monomer (b) which is not reactive to an oxazoline group (hereinafter, the resins of these polymers are often collectively referred to simply as "oxazoline-containing polymer resin"), is not particularly limited as long as it is one produced by polymerizing the oxazoline (a), examples of which are given below, and if desired the monomer (b) by a conventionally known polymerization method. Particularly preferably $R^5$ is a propenyl group.

Examples of the oxazoline (a) for use in the present invention include 2-isopropenyl-2-oxazoline, 2-isopropenyl-4-methyl-2-oxazoline, and 2-isopropenyl-5-methyl-2-oxazoline; at least one propenyloxazoline selected from these can be used. Of those oxazolines, 2-isopropenyl-2-oxazoline is preferred because it is easily available commercially.

The amount (as solid content) of the oxazoline (a) to be used is not particularly limited, but it is preferably 5 parts by weight or more (particularly from 10 to 90 parts by weight) per 100 parts by weight, on a solid basis, of the polymer or copolymer resin to be obtained. Use of the oxazoline in an amount of less than 5 parts by weight are undesirable because curing is insufficient and durability, water resistance, and other properties are tend to be impaired.

The monomer (b) to be used in the present invention, which is not reactive to an oxazoline group, is not particularly limited as long as it is a monomer copolymerizable with the oxazoline (a). Examples thereof include (meth)acrylic acid esters such as methyl (meth)acrylate, butyl (meth)acrylate, and 2-ethylhexyl (meth)acrylate; unsaturated nitriles such as (meth)acrylonitrile; unsaturated amides such as (meth)acrylamide and N-methylol(meth)acrylamide; vinyl esters such as vinyl acetate and vinyl propionate; vinyl ethers such as methyl vinyl ether and ethyl vinyl ether; α-olefins such as ethylene and propylene; α,β-unsaturated halogen compound monomers such as vinyl chloride, vinylidene chloride, and vinyl fluoride; and α,β-unsaturated aromatic monomers such as styrene and α-methylstyrene. These can be used alone or as a mixture of two or more thereof.

Although methods for polymerizing the oxazoline (a) and, if desired, the monomer (b) by a conventionally known polymerization technique to produce the oxazoline-containing polymer resin for use in the present invention are not particularly limited, the most preferred embodiment is emulsion polymerization from the standpoint of easiness of producing a water-based coating.

In the emulsion polymerization, the desired polymer resin can be synthesized by the so-called monomer dropping method, multi-stage polymerization method, pre-emulsification method, or other method using a conventionally known polymerization catalyst, surfactant, etc.

Usable examples of the oxazoline-containing polymer resin thus obtained include those described in JP-A-2-99537. More specifically, K-1010E or K-1020E (both being an emulsion of an oxazoline group-containing acrylic resin; nonvolatile content, 40%; pH, 8.5; number-average molecular weight, 100,000 or higher) each manufactured by Nippon Shokubai Co., Ltd., Japan may be used as it is.

The self-emulsifiable epoxy resin (3) to be used in the present invention is an epoxy resin in the molecule of which segments stably having emulsifying and/or dispersing ability in water have been incorporated, and which is capable of being emulsified and/or dispersed into an aqueous medium without the aid of an emulsifying agent or the like. For example, an epoxy resin is made self-emulsifiable by incorporating a hydrophilic group thereinto, or by incorporating an anionic group such as carboxyl or a cationic group such as amino, neutralizing the resulting anionic or cationic polymer with a base or an acid, respectively, to convert the polymer into a polymeric electrolyte. Examples of the self-emulsifiable epoxy resin further include an epoxy emulsion produced by radical-polymerizing the self-emulsifiable epoxy resin with a mixture of ethylenically unsaturated monomers including vinyl chloride in an aqueous medium.

As the epoxy resin used in the production of the self-emulsifiable epoxy resin, use can be made, for example, of a resin having two or more epoxide groups per molecule or a resin obtained by reacting the epoxy resin with a fatty acid, a dibasic acid, or bisphenol A, F, or B to completely or partly eliminate the epoxide groups. Of these, an epoxy resin obtained by condensing bisphenol A, F, or B or the like with an epihalohydrin in the presence of an alkaline catalyst is preferred because a water-based coating composition containing this epoxy resin gives a coated film excellent in physical strength, adhesion, chemical resistance, and other properties. The number-average molecular weight of the epoxy resin is usually 300 or higher, preferably 1,000 or higher.

Examples of the fatty acid include vegetable-oil fatty acids such as dehydrated castor oil, soybean oil, cotton seed oil, safflower oil, tall oil, castor oil, coconut oil. and palm oil. Examples of the dibasic acid include a maleic acid and a fumaric acid. Those fatty acids may be used alone or as a mixture thereof and/or as a mixture with a dibasic acid.

For the above-described modification of an epoxy resin, an acrylic resin is also usable, such as a copolymer of a monobasic unsaturated carboxylic acid, e.g., acrylic acid or methacrylic acid and other monomer copolymerizable therewith.

Examples of the copolymerizable monomer include alkyl (meth)acrylates, styrene-based monomers, hydroxyl group-containing monomers, N-substituted (meth)acrylamides, oxirane group-containing monomers, dialkyl maleates, dialkyl fumarates, and acrylonitrile. These may be used alone or in combination of two or more thereof.

Although the self-emulsifiable epoxy resin is not particularly limited as long as it satisfies the requirement described hereinabove, it preferably is an anionic self-emulsifiable epoxy resin, which imparts excellent stability to the coating composition. Specific examples of the preferred epoxy resin include such products on the market as DIC FINE EN-0270 (nonvolatile content, 20%; pH, 6-7) and DIC FINE EN-0280 both manufactured by Dainippon Ink & Chemicals, Inc., EPORSION manufactured by Kanebo NSC K.K., Japan, and HITALOID manufactured by Hitachi Chemical Co., Ltd., Japan.

The proportion of the self-emulsified polyurethane resin emulsion and self-emulsifiable epoxy resin to be incorporated in the coating composition of the present invention is such that the amount of the self-emulsifiable epoxy resin is in the range of preferably from 5 to 50 parts by weight, more preferably from 5 to 40 parts by weight, per 100 parts by weight of the self-emulsified polyurethane resin emulsion on a solid basis. If the amount of the self-emulsifiable epoxy resin incorporated is less than 5 parts by weight, insufficient adhesion results. If the amount is more than 50 parts by weight, processability and formability are impaired, which is undesirable.

The amount of the oxazoline-containing polymer resin (i.e., the polymer resin of the oxazoline or the copolymer resin of the oxazoline and the monomer) to be incorporated in the coating composition of the present invention is in the range of preferably from 1 to 50 parts by weight, more preferably from 5 to 20 parts by weight, per 100 parts by weight of the total amount of the self-emulsified polyurethane resin emulsion and the self-emulsifiable epoxy resin on a solid basis. If the amount of the oxazoline-containing polymer resin incorporated is less than 1 part by weight, the coating composition cures insufficiently to have impaired anticorrosive properties. If the amount is more than 50 parts by weight, adhesion to substrates is impaired, which is undesirable.

In a preferred embodiment of the present invention, the water-based coating composition further contains, besides the components described above, (4) a melamine cyanurate compound (a) and/or an ingredient (b) which is (b-1) a water-dispersible silica or water-dispersible aluminum silicate or (b-2) a colloidal particle dispersion comprising mainly (i) a fumed silica or fumed aluminum silicate, (ii) a colloidizing agent (aid) which is at least one compound selected from the group consisting of a phosphoric acid compound, a molybdic acid compound, a boric acid compound, and a silicic acid compound, and (iii) water.

It is preferable that a melamine cyanurate compound having a plane structure containing an isocyanuric ring be incorporated into the water-based coating composition of the present invention. When this coating composition is used for producing a precoated rust-proof steel sheet having a thin coated film, this compound imparts electrodeposition suitability required for electrodeposition coating and overcomes the unbalance among coated film performances which has accompanied conventional techniques.

The amount of the melamine cyanurate compound contained in the water-based coating composition is in the range of preferably from 0.05 to 25 parts by weight, more preferably from 0.5 to 6 parts by weight, per 100 parts by weight of the solid components of the composition.

The melamine cyanurate compound for use in the present invention is a compound represented by the following chemical formula

$$(C_6H_9N_9O_3)_n$$

and, specifically, is an equimolar addition compound of 2,4,6-triamino-1,3,5-triazine (hereinafter referred to as melamine) with 2,4,6-trihydroxy-1,3,5-triazine (hereinafter referred to as cyanuric acid) and/or its tautomer. It is presumed that, in a solid state, melamine molecules and cyanuric acid molecules are alternately linked to each other through weak hydrogen bonds to form a crystal having a plane structure as illustrated below.

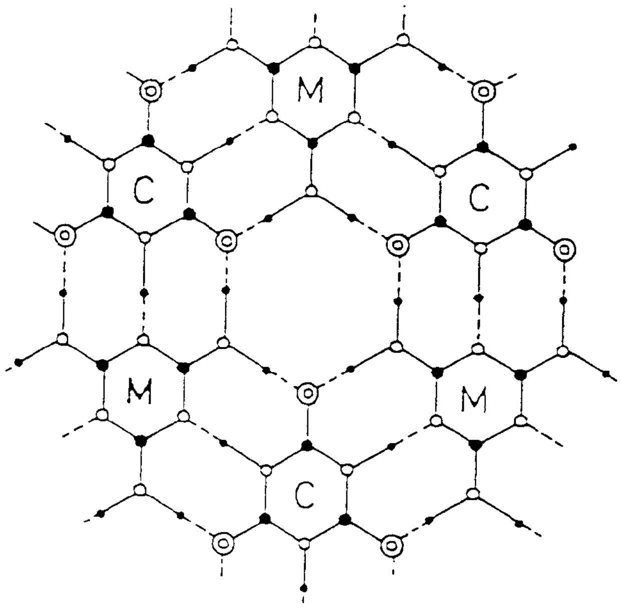

● = carbon, ○ = nitrogen, ◎ = oxygen, • = hydrogen

It is also presumed that the stereostructure is a stacked-plane structure having a constant plane spacing, i.e., the so-called graphite-type structure, as illustrated below.

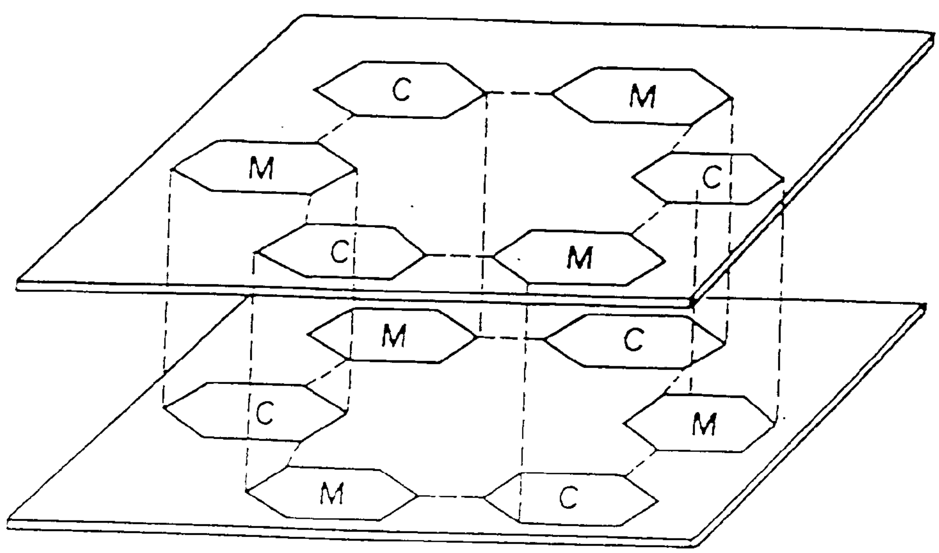

In the two illustrations given above, C represents a cyanuric acid molecule and M represents a melamine molecule.

The melamine cyanurate compound can be obtained by the process described in U.S. Patent 4,180,496 (corresponding to JP-B-60-33850). (The term "JP-B" as used herein means an "examined Japanese patent publication".) The compound is on the market as MC series (MC-FW, MC-PW, MC-BW, MC-UW, MC-420, MC-520, MC-600, etc.), which are manufactured by Nissan Chemical Industries, Ltd. Although the technique of incorporating a melamine cyanurate into a clear layer in the metallic coating of an automotive body or other substrate to produce a pearly luster like mica coating has been well known, this technique is entirely different from the present invention in function and effect.

This melamine cyanurate compound is so stable that it has good resistance to acids and alkalis and undergoes no chemical change in a pH range of from 1 to 14. This means that the water-based coating composition of the present invention which contains the melamine cyanurate compound has the effect of preventing the base metal/coating interface from having impaired adhesion due to electrical load in cationic electrodeposition, during which the substrate for the electrodeposited film is exposed to a pH of about 12.

The melamine cyanurate compound is only sparingly soluble in water and is heat-resistant. It is insoluble also in organic solvents for ordinary coating use; its solubility in dimethyl sulfoxide is as low as 0.011 g/100ml at 70°C. This means that the compound does not dissolve into the water infiltrated into the coated film during electrodeposition coating and hence does not inhibit the electrodeposition.

The water-dispersible silica or water-dispersible aluminum silicate (b-1) to be used in the present invention (hereinafter also referred to simply as "water-dispersible silica or the like") is a so-called colloidal silica or colloidal aluminum silicate, with the preferred range of the colloidal particle diameter being from 100 to 250 nm, especially from 150 to 250 nm. Known water-dispersible silicas or aluminum silicates usually supplied as an aqueous dispersion can be used as they are. Representative examples of such aqueous dispersions are SNOWTEX (trade name) manufactured by Nissan Chemical Industries, Ltd. The amount of the water-dispersible silica or the like to be incorporated is in the range of from 5 to 120 parts by weight, preferably from 20 to 100 parts by weight, per 100 parts by weight of the resins contained in the water-based coating composition. If the amount thereof is less than 5 parts by weight, the coating composition is poor in adhesion to substrates, e.g., steel substrates, and in the property of protecting the substrates against corrosion. On the other hand, if the amount thereof is more than 120 parts by weight, mechanical strength is impaired.

With respect to the relationship between the particle diameter of the water-dispersible silica or the like and the amount thereof to be incorporated is as follows. When the water-dispersible silica or the like has a particle diameter of from 100 to 150 nm, the adequate range of the amount thereof to be incorporated is from 20 to 60 parts by weight per 100 parts by weight of the resin solid components on a solid basis. When it has a particle diameter of from 150 to 250 nm, the adequate range of the amount thereof is from 40 to 100 parts by weight per 100 parts by weight of the resin solid components on a solid basis. Thus, when the water-dispersible silica or the like to be used has a relatively large particle diameter, the adequate amount thereof is larger increased.

The colloidal particle dispersion (b-2) preferably used in the present invention comprises mainly (i) a fumed silica or fumed aluminum silicate, (ii) a colloidizing agent (aid) which is at least one compound selected from the group consisting of a phosphoric acid compound, a molybdic acid compound, a boric acid compound, and a silicic acid compound, and (iii) water.

The fumed silica or fumed aluminum silicate, as a major component of the colloidal particle dispersion, is not particularly limited as long as it is one produced by the fuming process. However, since the incorporation of a high-purity silica or aluminum silicate is preferred for the prevention of the permeation of chlorine ions through film in a corrosive atmosphere (for example 5% aqueous sodium chloride solution), it is preferable that the fumed silica or aluminum silicate be a high-purity one containing no impurity ions. Particularly, a high-purity aluminum silicate is preferred.

Preferred examples of the fumed silica include AEROSIL 200, AEROSIL 300, and AEROSIL 380, all manufactured by Nippon Aerosil K.K. Preferred examples of the fumed aluminum silicate include AEROSIL MOX170, AEROSIL MOX80, and AEROSIL COK84, all manufactured by Nippon Aerosil K.K. Of these, AEROSIL MOX170 which is an aluminum silicate is advantageous over AEROSIL 200 which is a silica alone, because the former AEROSILs can be more efficiently colloidized and the colloidal particle dispersions produced therefrom do not gel even when any of the polyacids or the like which will be described later was used as the colloidizing agent (aid).

The amount of the fumed silica or fumed aluminum silicate to be incorporated is preferably from 50 to 200 parts by weight, more preferably from 100 to 150 parts by weight, per 1,000 parts by weight of the total amount of water and the fumed silica or fumed aluminum silicate. Incorporated amounts of less than 50 parts by weight are undesirable in that not only the colloidal particles obtained are apt to reaggregate, but also a water-based coating composition containing the colloidal particles gives a coated film having impaired anticorrosive properties. Incorporated amounts of more than 200 parts by weight are undesirable in that a water-based coating composition containing the colloidal particles obtained tends to give a coated film having impaired anticorrosive properties.

The colloidizing agent (aid) as another major component of the colloidal particle dispersion is not particularly limited as long as it is a compound which forms large anions in an aqueous solution. Examples thereof include phosphoric acid compounds such as condensed phosphoric acids, e.g., pyrophosphoric acid, tripolyphosphoric acid, tetrapolyphosphoric acid, pentapolyphosphoric acid, hexapolyphosphoric acid, heptapolyphosphoric acid, octapolyphosphoric acid, nonapolyphosphoric acid, decapolyphosphoric acid, metaphosphoric acid, trimetaphosphoric acid, hexametaphosphoric acid, and ultrapolyphosphoric acid, and the ammonium salts of these acids.

Preferred of these are metaphosphoric acid, hexametaphosphoric acid, and the ammonium salts thereof.

Although the alkali metal salts and alkaline earth metal salts of those phosphoric acid compounds also

exist, the inclusion of metal ions into the colloidal particle dispersion produces a fatal effect on the anticorrosive properties of a coated film to be formed from a water-based coating composition containing the dispersion. That is, the presence of metal ions in a coated film accelerates the permeation of halogen ions ($Cl^-$) through the film in a corrosive atmosphere and deprives the cation exchange ability of the silica and, as a result, the anticorrosive properties are considerably reduced. For this reason, use of an alkali metal salt or an alkaline earth metal salt is undesirable.

Besides the phosphoric acid compounds, examples of the colloidizing agent (aid) further include molybdic acid compounds such as ammonium molybdate tetrahydrate, boric acid compounds such as ammonium pentaborate and metaboric acid, and silicic acid compounds such as orthosilicic acid and metasilicic acid. However, since the silicic acids are only slightly soluble in water, they should be used after being dissolved in an ammoniacal alkaline solution. Further, although a sulfur-containing anion is chemically active in an oxidation-reduction reaction, it is also usable as a colloidizing agent (aid).

As examples of the colloidizing agent (aid), polyacids and ammonium salts thereof were enumerated above which form large anions in an aqueous solution. With respect to part of those compounds, the chemical structures are shown in Ex. 1 to Ex. 5 below.

Ex. 1 Tetrametaphosphoric acid $(HPO_3)_4$, forming a cyclic anion.

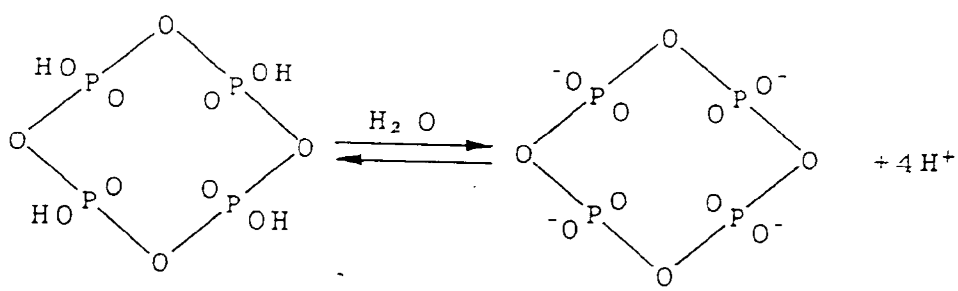

Ex. 2 Polyphosphoric acid ($H_{n-2}P_nO_{3n+1}$), forming a chain anion.

$$H_{n-2}P_nO_{3n+1} \overset{H_2O}{\rightleftharpoons} [P_nO_{3n+1}]^{-(n-2)} + (n-2)H^+$$

Ex. 3 Trimetaboric acid $(HBO_2)_3$, forming a cyclic anion.

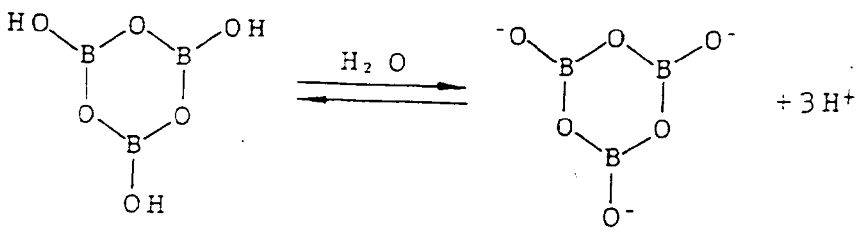

Ex. 4 Hexametaboric acid $(HBO_2)_6$, forming a chain anion.

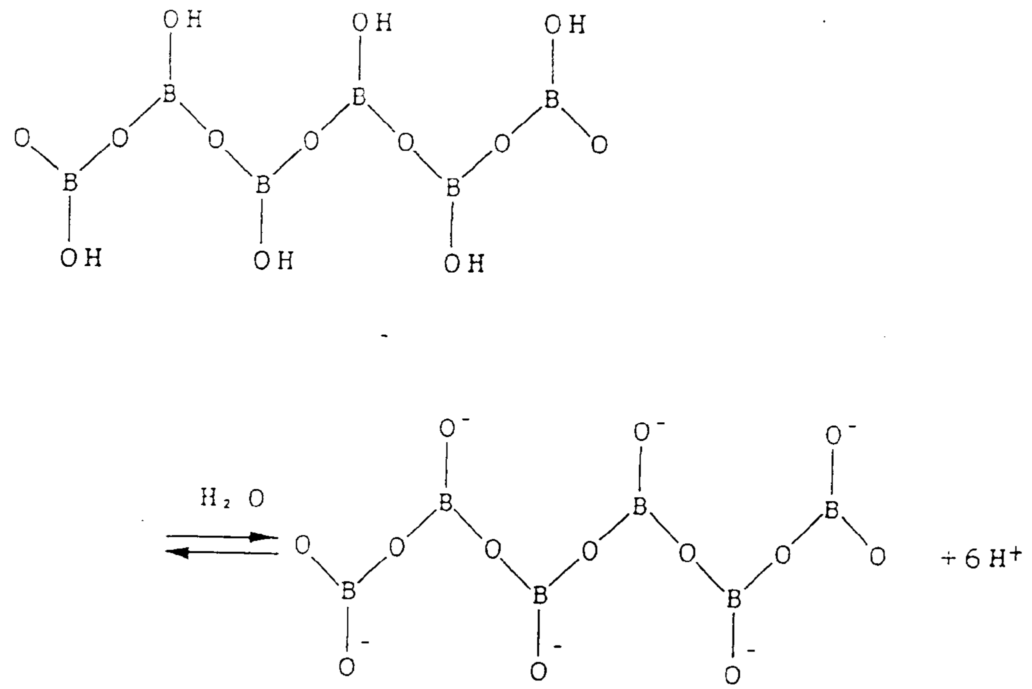


Ex. 5 Orthosilicic acid ($H_2SiO_4$), forming a cyclic anion (orthosilicic acid in aqueous solution is present in the form of a tetramer).

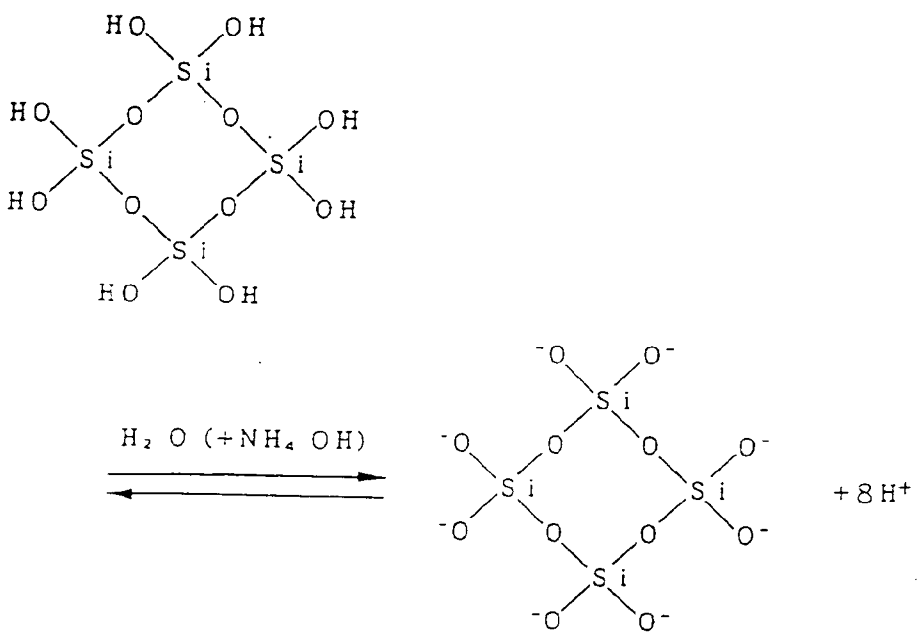


The colloidizing agent (aid) described above thus forms large anions in an aqueous solution and thereby is an effective means for effectively cutting hydrogen bonds of the above-described fumed silica or fumed aluminum silicate (e.g., AEROSIL 300) having a silanol group density of from 3 to 6 per $nm^2$ to obtain the finely divided particles. Since the anions are adsorbed onto silanol groups of the fumed silica or aluminum silicate, the finely divided colloidal particles can be prevented from reaggregating due to electrical repellency among the adsorbed anions. Use of monovalent anions is undesirable because a monovalent anion acts on only one silanol group and is hence not so effective in converting coarse aggregates, consisting of primary particles linked into chains by the formation of many hydrogen bonds, into finer colloidal particles (aggregated particles).

The amount of the colloidizing agent (aid) to be added is not particularly limited, and may be varied according to the desired particle diameter of the colloidal particles to be obtained. For example, in the case where colloidal particles having a particle diameter of 500 nm or less are to be produced, the colloidizing agent (aid) is added in an amount in the range of preferably from $2x10^{-4}$ to $2x10^{0}$ mol, more preferably from $2x10^{-3}$ to $2x10^{-2}$ mol, per mol of the silica or aluminum silicate. If the amount of the colloidizing agent (aid) added is less than $2x10^{-4}$ mol, the colloidal particles obtained disadvantageously aggregate readily and return to coarser particles of a network structure. If the amount thereof is more than $2x10^{0}$ mol, a water-based coating composition containing the colloidal particles obtained tends to disadvantageously give a coated film having impaired anticorrosive properties.

The water as still another major component of the colloidal particle dispersion preferably is one having a low impurity content, such as, for example, ion-exchanged water or pure water.

The amount of the water to be incorporated is preferably from 800 to 950 parts by weight, and more preferably from 850 to 900 parts by weight, per 1,000 parts by weight of the total amount of the water and the fumed silica or fumed aluminum silicate.

Although the colloidal particle dispersion of the present invention contains the above-described major components, i.e., fumed silica or fumed aluminum silicate, a colloidizing agent (aid) which is at least one compound selected from the group consisting of a phosphoric acid compound, a molybdic acid compound, a boric acid compound, and a silicic acid compound, and water, optional ingredients including a thickening agent may be suitably added if desired.

Methods for producing the colloidal particle dispersion comprising the above-described components are not particularly limited. However, since the recently popular method for producing a colloidal particle having good long-term stability by incorporating a core-shell type water-based emulsion (resin) is defective in that the emulsion may be destroyed by stirring shear, it is desirable to produce the colloid using a weak stirring force, more preferably without incorporating the emulsion. In an example of such preferred method, an aqueous solution containing fumed silica is stirred to form coarse aggregates and a polyacid solution (colloidizing agent (aid)) is then added thereto with further stirring to thereby effectively destroy hydrogen bonds of the coarse aggregates and convert the aggregates into colloidal particles (aggregated particles) having a smaller particle diameter. In this method, the anions of the water-soluble colloidizing agent (aid) are adsorbed onto the hydrogen atoms of silanol groups and the colloidal particles formed constitute a stable colloid due to electrical repellency among the adsorbed anions. Consequently, the colloidal particles return to neither coarse aggregates nor particles of a network structure even when allowed to stand.

By controlling the amount of the colloidizing agent (aid) to be added or by controlling other conditions, the colloidal particles to be thus obtained can have the desired particle diameter. For example, in the case where the colloid is to be used as an ingredient for a water-based coating composition for forming the organic coated film of a highly corrosion-resistant precoated steel sheet, the desired colloidal particle diameter is preferably in the range of 500 nm or less, more preferably in the range of from 150 to 250 nm, and most preferably in the range of from 150 to 200 nm.

The incorporation of the colloidal particle dispersion (b-2) into a water-based coating composition is conducted either during the production of the coating composition (premixing) or after the completion of the production (post-mixing). The amount thereof is in the range of generally from 15 to 60 parts by weight, preferably from 20 to 40 parts by weight, per 100 parts by weight of the resin solid components of the water-based coating composition on a solid basis. If the amount of the colloidal particles incorporated is less than 15 parts by weight, poor anticorrosive properties result. Amounts thereof exceeding 60 parts by weight are undesirable because the viscosity of the water-based coating composition becomes so high that difficulties are encountered in the production process, and because a roping phenomenon occurs due to the excessive pickup of the composition, resulting in the necessity of dilution.

For incorporating the colloidal particle dispersion into the water-based coating composition, a dispersion mixer such as a ball mill, sand-grinding mill, or dissolver is used.

The water-based coating composition of the present invention particularly preferably contains a polycarbonate diol as the self-emulsified polyurethane resin emulsion (1) and 2-isopropenyl-2-oxazoline as the oxazoline containing polymer resin (2).

If desired the pigments and additives which will be mentioned below and other ingredients can be incorporated as optional ingredients into the water-based coating composition of the present invention.

For applications where anticorrosive properties are especially important to the coating composition of this invention, a rust-preventive pigment can be used. Examples of the rust-preventive pigment include chromate-type rust-preventive pigments such as strontium chromate, lead chromate, barium chromate, and calcium chromate. However, the rust-preventive pigments that can be used in the present invention are not limited to these examples and other rust-preventive pigments are also usable. The amount of the rust-preventive pigment to be incorporated is preferably in the range of from 1 to 50 parts by weight (phr) per 100 parts by weight of the resin solid components on a solid basis. A coloring pigment may be used to color the coating composition for the purpose of imparting an attractive appearance, enabling easier discrimination between the front and back side, or improving hiding power. Examples of the coloring pigment include titanium oxide (white pigment), carbon black, graphite (black pigment), red iron oxide pigments, quinacridones (red pigment), phthalocyanine blue (blue pigment), phthalocyanine green (green pigment), benzimidazole pigments, and yellow iron oxide (yellow pigment).

Besides the coloring pigment described above, an extender pigment is also usable in this invention. Examples thereof include calcium carbonate, gypsum, clay, and talc.

To the water-based coating composition, which contains water as a medium for the components described above, a water-soluble organic solvent such as an alcohol or an ether may be added if desired for various purposes such as adjusting the viscosity of the water-based composition, anti-foaming, decreasing the surface tension to enhance the substrate-wetting ability, and lowering the freezing point. It is preferable that the water-based coating composition of the present invention be regulated to have a solid content in the range of from 15 to 50% by weight at the time of the production of the composition and in the range of from 5 to 40% by weight at the time of coating.

The amount of the organic solvent to be added is generally 20% by weight or below, preferably in the range of from 5 to 15% by weight, based on the amount of the water-based coating composition. If the amount thereof is more than 20% by weight, a lower flash point results and the properties characteristic of a water-based coating composition are impaired, which are undesirable.

In the water-based coating composition of the present invention, particularly preferably the solid/solvent ratio is (15 to 50)/(85 to 50).

Examples of the alcohol-type water-soluble organic solvent include polyhydric alcohols such as ethylene glycol and propylene glycol. Such polyhydric alcohols not only are excellent in the property of not adversely affecting the stability of the copolymer resin dispersion and water-dispersible silica, but serve as an effective diluent which improves storage stability and lowers the freezing point. As the ether-type water-soluble organic solvent, Cellosolve, butyl Cellosolve, or the like can be used, of which butyl Cellosolve is particularly effective because it has a high defoaming effect. However, since these Cellosolves and some monohydric alcohols such as n-butanol and isopropyl alcohol may impair the stability of the water-dispersible silica to cause aggregation and thus impair storage stability, it is important that these solvents should be used in a proper amount.

Examples of additives that are usable in this invention include anti-foaming agents, leveling agents, crawing (cissing) inhibitors, gloss improver, suspending agents, wetting agents (surfactants), lubricants, antiseptics, and mildew-proofing agents.

Of the above ingredients, the amount of the pigment to be incorporated in the water-based coating composition is preferably regulated in the range of from 0.5 to 30 parts by weight per 100 parts by weight of the resin solid components of the composition.

For mixing the ingredients, a device ordinarily used for the production of coating compositions is employed such as a ball mill, sand-grinding mill, or dissolver. Water is used as the medium to adjust the viscosity. Along with the water, a hydrophilic organic solvent can be used in such an amount as not to destroy the emulsion.

Methods for applying the water-based coating composition are not particularly limited, and use can be made of ordinary coating techniques such as roll coating, dip coating, shower coating, brushing, and dip spin coating. In the case where the precision of coating thickness, smoothness of coating surface, or the like is especially desired, it is preferred to employ such a coating technique as gravure coating, roll coating, curtain coating, bar coating, or offset gravure coating.

The thickness of the coated film (on a dry basis, hereinafter the term "thickness" means dry film thickness) formed from the water-based coating composition varies depending on use method and others, but it is in the range of usually from 0.5 to 20 μm, preferably from 1 to 10 μm.

Baking conditions for the water-based coating composition are not particularly limited, but it is preferred that the coating composition applied be baked under conditions of a maximum temperature of from 140 to 200°C and an oven-pass time of from 20 to 60 seconds.

As the metal sheet substrate to be coated, any of various steel sheets can be used. It is, however, advantageous that before the substrate is coated, it should be subjected to a pretreatment in order to make the substrate rust-proof and to improve the adhesion of the coating composition. Generally employed as the pretreatment is a degreasing treatment such as washing with an acid or alkali. In another pretreatment, such a degreasing treatment is followed by a chemical treatment using a chemical solution such as a phosphate or chromate solution. In particular, it is known that by conducting such pretreatments in series, coated films excellent in both adhesion and rust-preventive property can be formed stably.

The water-based coating composition of the present invention is then applied, which may be conducted,

for example, by the double-coating method in which the water-based coating composition of the present invention is applied as undercoating on the pretreated substrate and topcoating is then performed if desired. The undercoating serves to protect the substrate against corrosion and imparts adhesion to the metal sheet surface, the film deposited by surface treatment, and a topcoated film. The water-based coating composition of the present invention can be also used by the single-coating method in which the coating composition is applied as a rust-preventive treatment on the pretreated substrate; the resulting coated film may be coated with an electrodeposition coat, further followed by an intermediate-coating and/or topcoating if desired.

The present invention will be explained below in more detail by reference to the following examples, but the invention is not construed as being limited thereto.

EXAMPLE 1

A water-based coating composition was first prepared by mixing the self-emulsified polyurethane resin emulsion NEOTAN UE1101 (manufactured by Toagosei Chemical Industry Co., Ltd. (the same applies hereinafter)), the self-emulsifiable epoxy resin, DIC FINE EN-0270 (manufactured by Dainippon Ink & Chemicals, Inc. (the same applies hereinafter)), the propenyloxazoline-containing polymer resin K-1010E (manufactured by Nippon Shokubai Co., Ltd. (the same applies hereinafter)), and the water-dispersible silica, SNOWTEX N (manufactured by Nissan Chemical Industries, Ltd. (the same applied hereinafter)) in a weight ratio of 95/5/5/25 on a solid basis.

Subsequently, a steel sheet (EG) electroplated with zinc-nickel (sheet thickness: 0.4 mm) to be used as a coating substrate was cleansed with an alkali degreasing agent, rinsed with water, and dried. The resulting steel sheet was coated by a roll coating method with the treating chromate solution described below to form a film in an amount of 60 mg/m$^2$. Thus, a treated steel sheet was prepared. As the treating chromate solution, use was made of a solution obtained by adding zinc chromate (15 g in terms of the amount of chromium metal) and poly(acrylic acid) (JURYMER AC-10L; manufactured by Nippon Junyaku Co., Ltd., Japan; 10 g on a solid basis) to water in such an amount that the total volume became 1 liter, and then dispersing the solid ingredients into the water with a paint shaker for 1 hour. The water-based coating composition obtained above was applied with a bar coater, and baking was then conducted under conditions of a maximum temperature of 150°C and an oven-pass time of 20 seconds to obtain a test piece (A) having an organic coated film with a coated film thickness of 1.0 μm.

The test piece (A) was subjected to a corrosion resistance test (1). The test piece (A) was electrodeposition-coated with the cationic electrodeposition coating composition POWERTOP U-53 (manufactured by Nippon Paint Co., Ltd.) for 2 minutes and 30 seconds under conditions of an electrodeposition voltage of 200 V after 30-second pressure increase. Baking was then conducted at 170°C for 20 minutes to obtain a test piece (A-1) having an electrodeposited film with a film thickness of 20 μm. The obtained test piece (A-1) was evaluated with the following tests.

(A) Examination of Electrodeposited film for Film State:

Each electrodeposited film was examined for film state. The results obtained are shown in Table 2. The film states for the electrodeposited films were expressed by the following symbols.

E: Excellent (the same film appearance as that of cold-rolled steel sheet directly or of cold-rolled steel sheet treated with zinc phosphate directly was obtained.)

G: slight surface roughening was observed

M: moderate surface roughening was observed

B: considerable surface roughening with gas-caused pinholes was observed

(B) Warm Saline Solution Immersion Test for Electrodeposited film:

Each electrodeposited film was crosswise incised at a depth reaching the steel substrate, and the resulting test piece was immersed for 10 days (240 hours) in 5 wt% aqueous NaCl solution warmed at 55°C. Thereafter, the test piece was taken out and dried. A 2.4 cm-wide pressure-sensitive cellophane tape was applied to the crosswise incised part and then stripped. The resulting peeled state of the electrodeposited film was evaluated by measuring the distance (mm) from the crosswise incised part over which distance the film had peeled off. The results obtained are shown in Table 2. Each found value indicates the maximum peel distance for both sides of the crosswise incised part.

(C) Warm Water Immersion Test for Electrodeposited film:

Each electrodeposited film was crosshatch-wise incised at an interval of 1 mm at a depth reaching the steel substrate to make 100 squares, and the resulting test piece was immersed in 50°C warm water for 20 days (480 hours). Thereafter, the test piece was taken out and dried. A 2.4 cm-wide pressure-sensitive cellophane tape was applied to the crosshatch-wise incised part and then stripped. The resulting peeled state of the electrodeposited film was evaluated in terms of the number of remaining squares. The

numerator indicates the number of remaining squares; "100/100" means that no peeling occurred and the test piece was good in resistance to warm water immersion, while "0/100" means that all the squares had peeled off. The results obtained are shown in Table 2.

(D) Weldability Test:

Each test piece was subjected to 5,000-spot welding using a single-spot welder under welding conditions of a welding current of 9,000 A, electrode pressure of 200 kg, electrode diameter of 5 mm, weld time of 10 cycles. The state of the welds was examined and the nugget was also examined for smearing. The results obtained are shown in Table 2. The state of welds and the nugget smearing are expressed by the following symbols.

| State of Welds | Nugget Smearing |
|---|---|
| G: no abnormality | no smearing |
| M: slightly warped | slight smearing |
| P: insufficient in welding depth | considerable smearing |
| -: unable to be welded (or unwelded) | |

The test piece (A-1) was further subjected to intermediate-coating using "ORGA TO 4825 White Color Sealer" as the intermediate-coating paint. After the resulting test piece was allowed to stand for 10 minutes, baking was conducted at 140°C for 20 minutes to obtain a test piece having an intermediate-coated film with a dry thickness of 40 μm.

The resulting test piece was coated with "ORGA TO 4640UF Clear White" as a topcoating paint. After the coated test piece was allowed to stand for 10 minutes, baking was conducted at 140°C for 20 minutes to obtain a test piece (B) having a topcoated film with a dry thickness of 40 μm.

The test piece (B) obtained was subjected to a recoating suitability test.

(E) Corrosion Resistance Test (1) (Cycle Test; 100 cycles and 200 cycles):

(i) Saline Solution Spraying: The test piece was sprayed over a period of 4 hours with 5% NaCl solution warmed at 35°C.

(ii) Drying: The test piece sprayed with saline solution was then dried at 60°C for 2 hours.

(iii) Moistening: The dry test piece was then placed for 2 hours in a moist atmosphere having a humidity of 95% or higher and a temperature of 50°C.

Conducting the above treatments (i) to (iii) once was regarded as one cycle (the time required: 8 hours), and the treatments were repeated until 100 cycles and 200 cycles. In this cycle test, the results were evaluated based on the following criteria: when the test piece had not generated a white rust on the surface thereof, it was rated as G; when the proportion of the surface which had generated a white rust was less than 30%, the test piece was rated as M, provided that that proportion for a test piece in which the whole surface had generated a white rust was 100%; and when that proportion was 50% or above, the test piece was rated as B. The results obtained are shown in Table 2.

(F) Re-coating Suitability Test (evaluated after warm-water immersion in terms of secondary bondability):

The test piece after coating was allowed to stand at room temperature for 24 hours, subsequently immersed in 40°C deionized water for 10 days, and then allowed to stand at room temperature for 4 hours. In accordance with JIS-K-5400, the coating of the resulting test piece was crosshatch-wise incised at an interval of 2 mm with a sharp cutter knife to form 11 parallel incisions in each of the two perpendicular directions to thereby form 100 2-mm-squares partitioned by the incisions. A pressure-sensitive cellophane tape was applied to the incised coating surface and then stripped. The test piece was then evaluated by counting the coated film squares remaining on the test piece. Symbol G indicates that no peeling occurred and the test piece was good in secondary bondability, M indicates that the number of the squares remaining unpeeled was less than 50% of the total number, and B indicates that the number of the squares remaining unpeeled was not less than 50% of the total number. The results obtained are shown in Table 2.

## EXAMPLE 2

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the self-emulsifiable epoxy resin, HITALOID 7800J-21 (manufactured by Hitachi Chemical Co., Ltd. (the same applies hereinafter)), the propenyloxazoline-containing polymer resin, K-1010E, and the water-dispersible silica, SNOWTEX N in a weight ratio of 75/25/20/25 on a solid basis. Thus, the desired test piece was obtained.

The test piece obtained was subjected to the same test in the same manner as in Example 1. The results obtained in each test are shown in Table 2.

EXAMPLE 3

An organic coated film, electrodeposited film, intermediate-coated film, and topcoated film were formed on a substrate in the same manner as in Example 1 except that a water-based coating composition was prepared by mixing the self-emulsified polyurethane resin emulsion, SUPER FLEX 100 (manufactured by Daiichi Kogyo Seiyaku Co., Ltd. (the same applies hereinafter)), the self-emulsifiable epoxy resin, HITALOID 7800J-21, the propenyloxazoline-containing polymer resin, K-1010E, and the water-dispersible silica SNOWTEX N in a weight ratio of 75/40/20/25 on a solid basis. Thus, the desired test piece was obtained.

The test piece obtained was subjected to the same test in the same manner as in Example 1. The results obtained in each test are shown in Table 2.

EXAMPLE 4

An organic coated film, electrodeposited film, intermediate-coated film, and topcoated film were formed on a substrate in the same manner as in Example 1 except that a water-based coating composition was prepared by mixing the self-emulsified polyurethane resin emulsion, HYDRAN AP-10 (manufactured by Dainippon Ink & Chemicals, Inc. (the same applies hereinafter)), the self-emulsifiable epoxy resin, DIC FINE EN-0280 (manufactured by Dainippon Ink & Chemicals, Inc. (the same applies hereinafter)), the propenyloxazoline-containing polymer resin, K-1020E (manufactured by Nippon Shokubai Co., Ltd. (the same applies hereinafter)), the water-dispersible silica, SNOWTEX N, and the pigment, CM-25P (manufactured by Nippon Bengara Kogyo Co., Ltd., Japan (the same applies hereinafter)) in a weight ratio of 75/25/30/25/7.5 on a solid basis. Thus, the desired test piece was obtained.

The test piece obtained was subjected to the same test in the same manner as in Example 1. The results obtained in each test are shown in Table 2.

EXAMPLE 5

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the self-emulsifiable epoxy resin, DIC FINE EN-0280, the propenyloxazoline-containing polymer resin, K-1020E, and the water-dispersible silica, SNOWTEX N in a weight ratio of 69/31/50/25 on a solid basis. Thus, the desired test piece was obtained.

The test piece obtained was subjected to the same test in the same manner as in Example 1. The results obtained in each test are shown in Table 2.

EXAMPLE 6

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the self-emulsifiable epoxy resin, EPOMIK KR-617 (manufactured by Mitsui Petrochemical Industries, Ltd., Japan), the propenyloxazoline-containing polymer resin, K-1020E, and the water-dispersible silica, SNOWTEX N in a weight ratio of 69/31/20/25 on a solid basis. Thus, the desired test piece was obtained.

The test piece obtained was subjected to the same test in the same manner as in Example 1. The results obtained in each test are shown in Table 2.

EXAMPLE 7

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the self-emulsifiable epoxy resin, DIC FINE EN-0270, the propenyloxazoline-containing polymer resin, K-1020E, the water-dispersible silica, SNOWTEX N, and a melamine cyanurate (MC-600, manufactured by Nissan Chemical Industries, Ltd. (the

same applies hereinafter)) in a weight ratio of 75/25/20/25/3 on a solid basis. Thus, the desired test piece was obtained.

The test piece obtained was subjected to the same test in the same manner as in Example 1. The results obtained in each test are shown in Table 2.

EXAMPLE 8

An organic coated film, electrodeposited film, intermediate-coated film, and topcoated film were formed on a substrate in the same manner as in Example 1 except that a water-based coating composition was prepared by mixing the self-emulsified polyurethane resin emulsion, SUPER FLEX 100, the self-emulsifiable epoxy resin, HITALOID 7800J-21, the propenyloxazoline-containing polymer resin, K-1010E, and the colloidal silica particle dispersion as described below in a weight ratio of 75/25/20/25 on a solid basis. The silica dispersion was one obtained by adding a fumed silica (AEROSIL 300) to ion-exchanged water with stirring (2,000 rpm), dropwise adding metaboric acid thereto in such an amount that the proportion of ion-exchanged water/fumed silica/metaboric acid was (870 parts by weight)/(130 parts by weight)/($4x10^{-3}$ mol), and then further stirring the mixture for 30 minutes under the same stirring conditions. Thus, the desired test piece was obtained.

The test piece obtained was subjected to the same test in the same manner as in Example 1. The results obtained in each test are shown in Table 2.

EXAMPLE 9

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the self-emulsifiable epoxy resin, DIC FINE EN-0270, the propenyloxazoline-containing polymer resin, K-1020E, and the colloidal aluminum silicate particle dispersion as described below in a weight ratio of 95/5/15/25 on a solid basis. The aluminum silicate dispersion was one obtained by adding a fumed aluminum silicate (AEROSIL MOX 170) to ion-exchanged water with stirring (2,000 rpm), dropwise adding metaboric acid thereto in such an amount that the proportion of ion-exchanged water/fumed aluminum silicate/metaboric acid was (870 parts by weight)/(130 parts by weight)/($4x10^{-3}$ mol), and then further stirring the mixture for 30 minutes under the same stirring conditions. Thus, the desired test piece was obtained.

The test piece obtained was subjected to the same test in the same manner as in Example 1. The results obtained in each test are shown in Table 2.

EXAMPLE 10

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the self-emulsifiable epoxy resin, HITALOID 7800J-21, propenyloxazoline-containing polymer resin, K-1020E, the same colloidal aluminum silicate particle dispersion as that used in Example 9, and a melamine cyanurate in a weight ratio of 75/75/20/25/3 on a solid basis. Thus, the desired test piece was obtained.

The test piece obtained was subjected to the same test in the same manner as in Example 1. The results obtained in each test are shown in Table 2.

EXAMPLE 11

A water-based coating composition (nonvolatile content, 20%) was first prepared by mixing the self-emulsified polyurethane resin emulsion, SUPER FLEX 100, the self-emulsifiable epoxy resin, HITALOID 7800J-21, the propenyloxazoline-containing polymer resin K-1020E, the pigment, STRO N (strontium chromate, manufactured by Kikuchi Color & Chemicals Corp., Japan (the same applies hereinafter)), and the pigment, TITAN CR-91 (titanium oxide, manufactured by Ishihara Sangyo Kaisha Ltd., Japan (the same applies hereinafter)) in a weight ratio of 75/25/20/62.5/62.5 on a solid basis.

Subsequently, a hot-galvanized steel sheet (GI) (sheet thickness, 0.4 mm) to be used as a coating substrate was degreased with trichlene and then treated with zinc phosphate. The water-based coating composition obtained above was applied on the resulting steel sheet with a bar coater, and baking was then conducted under conditions of a maximum temperature of 200°C and an oven-pass time of 50 seconds to obtain a test

piece having, as an undercoated film, an organic coated film in an amount of 5 g/m$^2$ (on a dry basis).

The test piece was coated with NIPPE SUPERCOAT 300HQ (polyester resin topcoat) as a topcoating paint. Baking was conducted under conditions of a maximum temperature of 230°C and an oven-pass time of 60 seconds to obtain a test piece having a topcoated film in an amount of 18 g/m$^2$ (on a dry basis).

The test piece obtained was subjected to the following corrosion resistance test (2).

Corrosion Resistance Test (2) (processed part):

A stack of four sheets of the test piece obtained was bent, and the bent sheets (4-T part) were sprayed over a period of 1,000 hours with 5% NaCl solution warmed at 35°C.

The test piece sprayed with saline solution was evaluated as follows: when the 4-T part had not generated a white rust on the surface thereof, it was rates as G; and when it had generated a white rust on the surface thereof, it was rated as B. The results obtained are shown in Table 2.

## COMPARATIVE EXAMPLE 1

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the self-emulsifiable epoxy resin, DIC FINE EN-0270, and the water-dispersible silica, SNOWTEX N in a weight ratio of 95/5/25 on a solid basis. Thus, the desired test piece was obtained.

The test piece obtained was subjected to the same test in the same manner as in Example 1. The results obtained in each test are shown in Table 3.

## COMPARATIVE EXAMPLE 2

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101 and the water-dispersible silica, SNOWTEX N in a weight ratio of 100/25 on a solid basis. Thus, the desired test piece was obtained.

The test piece obtained was subjected to the same test in the same manner as in Example 1. The results obtained in each test are shown in Table 3.

## COMPARATIVE EXAMPLE 3

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the propenyloxazoline-containing polymer resin, K-1010E, and the water-dispersible silica, SNOWTEX N in a weight ratio of 100/25/25 on a solid basis. Thus, the desired test piece was obtained.

The test piece obtained was subjected to the same test in the same manner as in Example 1. The results obtained in each test are shown in Table 3.

## COMPARATIVE EXAMPLE 4

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the self-emulsifiable epoxy resin, DIC FINE EN-0270, and the water-based methylated melamine resin, SUMIMAL M40W (manufactured by Sumitomo Chemical Co., Ltd., Japan (the same applies hereinafter)) in a weight ratio of 95/5/25 on a solid basis. Thus, the desired test piece was obtained.

The test piece obtained was subjected to the same test in the same manner as in Example 1. The results obtained in each test are shown in Table 3.

## COMPARATIVE EXAMPLE 5

An organic coated film, electrodeposited film, intermediate-coated film, and topcoated film were formed on a substrate in the same manner as in Example 1 except that a water-based coating composition was prepared by mixing the self-emulsified polyurethane resin emulsion, UE1101, the epoxy resin emulsion, AQUATOHTO 3540 (nonvolatile content, 55%; pH, 7.0-7.5; epoxy equivalent, 1,800; manufactured by Tohto Kasei

K.K., Japan (the same applies hereinafter)), the propenyloxazoline-containing polymer resin, K-1010E, and the water-dispersible silica, SNOWTEX N in a weight ratio of 95/10/25/25 on a solid basis. Thus, the desired test piece was obtained.

The test piece obtained was subjected to the same test in the same manner as in Example 1. The results obtained in each test are shown in Table 3.

## COMPARATIVE EXAMPLE 6

An organic coated film, electrodeposited film, intermediate-coated film, and topcoated film were formed on a substrate in the same manner as in Example 1 except that a water-based coating composition was prepared by mixing the acrylic resin emulsion, BONCOAT ES-141 (nonvolatile content 45%; pH, 4.0-5.5; particle diameter, 0.1-0.2 μm; manufactured by Dainippon Ink & Chemicals, Inc.), the propenyloxazoline-containing polymer resin, K-1010E, and the water-dispersible silica, SNOWTEX N in a weight ratio of 100/25/25 on a solid basis. Thus, the desired test piece was obtained.

The test piece obtained was subjected to the same test in the same manner as in Example 1. The results obtained in each test are shown in Table 3.

## COMPARATIVE EXAMPLE 7

An undercoated film and a topcoated film were formed on a substrate in the same manner as in Example 11 except that a water-based coating composition (nonvolatile content, 20%) was prepared by mixing the epoxy resin emulsion, AQUATOHTO 3540, the water-based methylated melamine resin, SUMIMAL M40W, the pigment, STRO N, and the pigment, TITAN CR-91 in a weight ratio of 90/10/50/50 on a solid basis. Thus, the desired test piece was obtained.

The test piece obtained was subjected to the corrosion resistance test (2) in the same manner as in Example 11. The results obtained are shown in Table 3.

TABLE 2

| Example | Kind of each component of coating composition (amount[1]) | | | | | | | Substrate |
|---|---|---|---|---|---|---|---|---|
| | Urethane resin | Epoxy resin | Crosslinking agent | Silica | Pigment | | Melamine cyanurate | |
| 1 | UE1101 (95) | DIC FINE EN 0270 (5) | K-1010E (5) | SNOWTEX N (25) | | | | EG |
| 2 | UE1101 (75) | HITALOID 7800 J-21 (25) | K-1010E (20) | SNOWTEX N (25) | | | | EG |
| 3 | SUPER FLEX 100 (75) | HITALOID 7800 J-21 (40) | K-1010E (20) | SNOWTEX N (25) | | | | EG |
| 4 | HYDRAN AP-10 (75) | DIC FINE EN 0280 (25) | K-1020E (30) | SNOWTEX N (25) | CM-25P (7.5) | | | EG |
| 5 | UE1101 (69) | DIC FINE EN 0280 (31) | K-1020E (50) | SNOWTEX N (25) | | | | EG |
| 6 | UE1101 (69) | EPOMIK KR-617 (31) | K-1020E (20) | SNOWTEX N (25) | | | | EG |
| 7 | UE1101 (75) | DIC FINE EN 0270 (25) | K-1020E (20) | SNOWTEX N (25) | | | melamine cyanurate (3) | EG |
| 8 | SUPER FLEX 100 (75) | HITALOID 7800 J-21 (25) | K-1010E (20) | silica dispersion [2] (25) | | | | EG |
| 9 | UE1101 (95) | DIC FINE EN 0270 (5) | K-1020E (15) | aluminum silicate dispersion [2] (25) | | | | EG |
| 10 | UE1101 (75) | HITALOID 7800 J-21 (25) | K-1020E (20) | aluminum silicate dispersion [2] (25) | | | melamine cyanurate (3) | EG |
| 11 | SUPER FLEX 100 (75) | HITALOID 7800 J-21 (25) | K-1020E (20) | | STRO N (62.5) | TITAN CR-91 (62.5) | | GI |

TABLE 2 (cont'd)

| Example | Corrosion Resistance (1) 100/200 cycles | Re-coating suitability | Corrosion resistance (2) | Appearance of Electrodeposited surface | Immersion in warm saline solution (mm) | Immersion in warm water (number of remaining squares) | Weldability |
|---|---|---|---|---|---|---|---|
| 1 | G/M | G | | G | 12 | 80/100 | G |
| 2 | G/M | G | | G | 14 | 75/100 | G |
| 3 | G/M | G | | G | 15 | 75/100 | G |
| 4 | G/G | G | | G | 18 | 70/100 | G |
| 5 | G/G | G | | G | 17 | 85/100 | G |
| 6 | G/M | G | | G | 13 | 80/100 | G |
| 7 | G/M | G | | E | 12 | 75/100 | G |
| 8 | G/G | G | | G | 0 | 100/100 | G |
| 9 | G/G | G | | G | 0 | 100/100 | G |
| 10 | G/G | G | | E | 0 | 100/100 | G |
| 11 | | | G | | | | |

Note 1) The values in the parentheses indicate the amounts (parts by weight) of the respective components per 100 parts by weight of the solid components of the water-based coating composition.

2) The silica dispersion and the aluminum silicate dispersion each is one kind of the colloidal dispersion which may be used in the invention.

TABLE 3

| Comparative Example | Kind of each component of coating composition (amount[1)]) | | | | | | Substrate | Corrosion resistance (1) 100/200 cycles |
|---|---|---|---|---|---|---|---|---|
| | Urethane resin | Epoxy resin | Crosslinking agent | Silica | Pigment | | | |
| 1 | UE1101 (95) | DIC FINE EN 0270 (5) | | SNOWTEX N (25) | | | EG | M/B |
| 2 | UE1101 (100) | | | SNOWTEX N (25) | | | EG | M/B |
| 3 | UE1101 (100) | | K-1010E (25) | SNOWTEX N (25) | | | EG | G/M |
| 4 | UE1101 (95) | DIC FINE EN 0270 (5) | SUMIMAL M40W (25) | | | | EG | M/B |
| 5 | UE1101 (90) | AQUATOHTO 3540 (10) | K-1010E (25) | SNOWTEX N (25) | | | EG | M/B |
| 6 | BONCOAT ES-141 (100)[2)] | | K-1010E (25) | SNOWTEX N (25) | | | EG | B/B |
| 7 | | AQUATOHTO 3540 (90) | SUMIMAL M40W (10) | | STRO N (50) | TITAN CR-91 (50) | GI | |

TABLE 3 (cont'd)

| Comparative Example | Re-coating suitability | Corrosion resistance (2) | Appearance of Electrodeposited surface | Immersion in warm saline solution (mm) | Immersion in warm water (number of remaining squares) | Weldability |
|---|---|---|---|---|---|---|
| 1 | M | | G | 25 | 5/100 | G |
| 2 | B | | G | 24 | 5/100 | G |
| 3 | B | | G | 32 | 10/100 | G |
| 4 | M | | B | 26 | 50/100 | G |
| 5 | G | | G | 24 | 10/100 | G |
| 6 | M | | G | 23 | 0/100 | G |
| 7 | | B | | | | |

Note 1) The values in the parentheses indicate the amounts (parts by weight) of the respective components per 100 parts by weight of the solid components of the water-based coating composition.

2) BONCOAT ES-141 is not a urethane resin but an acrylic emulsion.

The water-based coating composition of the present invention can form a coated film having a high degree of anticorrosive properties, processability, and re-coating suitability due to the combined use of (1) a self-emulsified polyurethane resin emulsion, (2) an oxazoline polymer resin (i.e., an oxazoline-containing polymer

resin), and (3) a self-emulsifiable epoxy resin, because the oxazoline groups react, at a low temperature within a short time, with carboxyl groups used as a hydrophilic group necessary for hydration, and because of the incorporation of secondary OH groups attributable to the epoxy emulsion.

Further, the water-based coating composition containing a melamine cyanurate has an advantage, besides the above-described one, that since the density of sites usable for current application in electrodeposition coating can be controlled by changing the amount of the melamine cyanurate compound to be incorporated, it can be utilized in a wide range of fields as a coating composition excellent in weldability, a coating composition for rust-proof steel sheets excellent in electrodeposition suitability, press processing suitability, spot weldability, rust resistance, corrosion resistance after electrodeposition, and secondary bondability, and as a water-based coating composition applicable to various substrates.

Furthermore, the water-based coating composition containing a water-dispersible silica, a water-dispersible aluminum silicate, or a colloidal particle dispersion comprising mainly (i) a fumed silica or fumed aluminum silicate, (ii) a colloidizing agent (aid) which is at least one compound selected from the group consisting of a phosphoric acid compound, a molybdic acid compound, a boric acid compound, and a silicic acid compound, and (iii) water attains even better anticorrosive properties and, hence, can form a coated film practically applicable to automotive steel sheets or the like even in a severe corrosive environment.

While the invention has been described in detail and with reference to specific embodiments thereof, it will be apparent to one skilled in the art that various changes and modifications can be made therein without departing from the spirit and scope thereof.

## Claims

1. A water-based coating composition comprising
   (1) a self-emulsified polyurethane resin emulsion,
   (2) a resin which is either (i) a polymer of an oxazoline represented by formula (I):

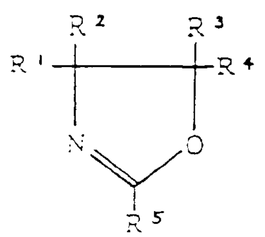

(I)

   wherein $R^1$, $R^2$, $R^3$, and $R^4$ each represents a hydrogen atom, a halogen atom, an alkyl group, a phenyl group, or a substituted phenyl group; and $R^5$ represents a non-cyclic organic group having an addition-polymerizable unsaturated bond or (ii) a copolymer of the oxazoline and a monomer which is not reactive to an oxazoline group, and
   (3) a self-emulsifiable epoxy resin.

2. The water-based coating composition as claimed in claim 1, which further contains (4) a melamine cyanurate (a) and/or an ingredient (b) which is (b-1) a water-dispersible silica or water-dispersible aluminum silicate or (b-2) a colloidal particle dispersion comprising mainly (i) a fumed silica or fumed aluminum silicate, (ii) a colloidizing agent (aid) which is at least one compound selected from the group consisting of a phosphoric acid compound, a molybdic acid compound, a boric acid compound, and a silicic acid compound, and (iii) water.

3. The water-based coating composition as claimed in claim 1, wherein the polyurethane resin (1) is one obtained by reacting (a) a polyol which is at least one compound selected from the group consisting of a diol, a polyester polyol and a polyether polyol with (b) an aromatic, aliphatic, or alicyclic diisocyanate.

4. The water-based coating composition as claimed in claim 3, wherein the polyol (a) is a polycarbonate diol and the polyurethane resin emulsion (1) is an anionic self-emulsified polyurethane emulsion.

5. The water-based coating composition as claimed in claim 1, wherein $R^5$ in formula (I) is a propenyl group.

6. The water-based coating composition as claimed in claim 1, wherein the oxazoline polymer resin or oxazoline (2) is at least one compound selected from the group consisting of 2-isopropenyl-2-oxazoline, 2-isopropenyl-4-methyl-2-oxazoline, and 2-isopropenyl-5-methyl-2-oxazoline.

7. The water-based coating composition as claimed in claim 6, wherein the oxazoline polymer resin or oxazoline is 2-isopropenyl-2-oxazoline.

8. The water-based coating composition as claimed in claim 1, wherein the monomer which is not reactive to an oxazoline group is at least one compound selected from the group consisting of a (meth)acrylic acid ester, an unsaturated nitrile, an unsaturated amide, a vinyl ester, a vinyl ether, an $\alpha$-olefin, an $\alpha,\beta$-unsaturated halogen compound monomer, and an $\alpha,\beta$-unsaturated aromatic monomer.

9. The water-based coating composition as claimed in claim 1, wherein the amount of the oxazoline is 5 parts by weight or more per 100 parts by weight of the resin (2) on a solid basis.

10. The water-based coating composition as claimed in claim 1, wherein the amount of the self-emulsifiable epoxy resin (3) is from 5 to 50 parts by weight per 100 parts by weight of the self-emulsified polyurethane resin emulsion (1) on a solid basis.

11. The water-based coating composition as claimed in claim 1, wherein the amount of the self-emulsifiable epoxy resin emulsion (3) is from 5 to 40 parts by weight per 100 parts by weight of the self-emulsified polyurethane resin emulsion (1) on a solid basis.

12. The water-based coating composition as claimed in claim 1, wherein the amount of the resin (2) is from 1 to 50 parts by weight per 100 parts by weight of the sum of the self-emulsified polyurethane resin emulsion (1) and the self-emulsified epoxy resin (3) on a solid basis.

13. The water-based coating composition as claimed in claim 1, wherein the amount of the resin (2) is from 5 to 20 parts by weight per 100 parts by weight of the sum of the self-emulsified polyurethane resin emulsion (1) and the self-emulsifiable epoxy resin (3) on a solid basis.

14. The water-based coating composition as claimed in claim 2, wherein the amount of the melamine cyanurate (a) is from 0.05 to 25 parts by weight per 100 parts by weight of the resin solid components on a solid basis.

15. The water-based coating composition as claimed in claim 2, wherein the amount of the silica or aluminum silicate (b-1) is from 20 to 60 parts by weight and from 40 to 100 parts by weight per 100 parts by weight of the resin solid components on a solid basis when the component (b-1) has a particle diameter of from 100 to 150 nm and from 150 to 250 nm, respectively.

16. The water-based coating composition as claimed in claim 2, wherein the amount of the colloidal particle dispersion (b-2) is from 15 to 60 parts by weight per 100 parts by weight of the resin solid components of the water-based coating composition on a solid basis.

17. The water-based coating composition as claimed in claim 2, wherein the amount of the colloidal particle dispersion (b-2) is from 20 to 40 parts by weight per 100 parts by weight of the resin solid components of the water-based coating composition on a solid basis.

18. The water-based coating composition as claimed in claim 2, wherein the solid/solvent ratio is (15-50)/(85-50) by weight and the proportions of the solid components are such that the ratio of the self-emulsifiable epoxy resin (3) to the self-emulsified polyurethane resin emulsion (1) is (5-40)/100 by weight, the ratio of the resin (2) to the sum of the polyurethane resin (1) and the epoxy resin (3) is (5-20)/100 by weight, the ratio of the melamine cyanurate (a) to the resin solid components is (0.05-25)/100 by weight, and the ratio of the colloidal particles dispersion (b-2) to the resin solid components is (20-40)/100 by weight.

19. The water-based coating composition as claimed in claim 18, wherein the self-emulsified polyurethane resin emulsion (1) is a polycarbonate diol and the oxazoline polymer resin or oxazoline (2) is 2-isopropenyl-2-oxazoline.

20. The water-based coating composition as claimed in claim 1, wherein the coating composition is coated

on a substrate pretreated with a metal in a thickness of from 0.5 to 20 μm on a dry basis.

**21.** The water-based coating composition as claimed in claim 20, wherein the film coated with the water-based coating composition is further subjected to an electro-deposition coating.

**22.** The water-based coating composition as claimed in claim 21, wherein the electrodeposited film is subjected to an intermediate-coating and/or a topcoating.

European Patent Office

# EUROPEAN SEARCH REPORT

Application Number
EP 94 30 0784

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| P,X | DATABASE WPI Week 9336, Derwent Publications Ltd., London, GB; AN 285575 & JP-A-5 202 336 (ASAHI CHEM) 10 August 1993 * abstract * | 1 | C08G18/08 C08G18/44 C09D175/06 |
| P,D,X | DATABASE WPI Week 9349, Derwent Publications Ltd., London, GB; AN 392894 & JP-A-5 295 275 (NIPPON SHOKUBAI) 9 November 1993 * abstract * | 1 | |
| A | US-A-4 791 168 (SALATIN ET AL) * column 3, line 57 - column 8, line 29; claims 1-7 * | 1,2 | |
| A | US-A-4 762 883 (GOEL) | | TECHNICAL FIELDS SEARCHED (Int.Cl.5) |
| A | EP-A-0 089 497 (BASF) | | C08G C09D |
| D,A | US-A-4 180 496 (YANAGIMOTO ET AL) * claims * | 2 | |
| A | DATABASE WPI Week 8809, Derwent Publications Ltd., London, GB; AN 060389 & JP-A-63 158 085 (DAINIPPON INK CHEM) 12 February 1988 * abstract * | 1 | |
| A | EP-A-0 220 000 (POLYVINYL CHEMICALS) | | |

The present search report has been drawn up for all claims

| Place of search | Date of completion of the search | Examiner |
|---|---|---|
| THE HAGUE | 1 June 1994 | Bourgonje, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)